# EUROPÄISCHE PATENTSCHRIFT

(11) **EP 3 408 557 B1**
(45) Veröffentlichungstag und Bekanntmachung des Hinweises auf die Patenterteilung: **06.05.2020**
(21) Anmeldenummer: 17702795.0
(22) Anmeldetag: 24.01.2017
(51) Int. Cl.: F16F 9/18, F16F 9/06, F16F 9/32

(54) **SCHWINGUNGSDÄMPFER**
VIBRATION DAMPER
AMORTISSEUR DE VIBRATIONS

(30) Priorität: 29.01.2016 DE 202016100438 U
(43) Veröffentlichungstag der Anmeldung: 05.12.2018
(73) Patentinhaber: ThyssenKrupp Bilstein GmbH, 58256 Ennepetal (DE); thyssenkrupp AG, 45143 Essen (DE)
(72) Erfinder: FRITZ, Michael, 58339 Breckerfeld (DE)
(74) Vertreter: thyssenkrupp Intellectual Property GmbH
(86) Internationale Anmeldenummer: PCT/EP2017/051387
(87) Internationale Veröffentlichungsnummer: WO 2017/129545

(56) Entgegenhaltungen:
- EP-A1- 2 123 932
- DE-A1-102010 031 088
- DE-U- 1 662 421
- DE-U1-202005 021 063
- FR-A1- 2 418 391
- FR-A1- 2 993 623
- FR-A5- 2 044 525

## Beschreibung

Die vorliegende Erfindung betrifft einen Schwingungsdämpfer, insbesondere ausgebildet für ein Fahrwerk eines Fahrzeuges, mit einem Dämpferrohr und mit einem Dämpferkolben, der im Dämpferrohr hubbeweglich angeordnet ist und der mit einer Kolbenstange verbunden ist, die aus dem Dämpferrohr herausgeführt ist, und wobei der Dämpferkolben einen ersten, kolbenstangenseitigen mit Öl gefüllten Dämpferraum von einem zweiten, kolbenstangenfernen mit Öl gefüllten Dämpferraum beweglich trennt, und wobei an einem Ende des Dämpferrohres ein Bodenelement angeordnet ist, das ein offenes Ende des Dämpferrohres abdichtet.

### STAND DER TECHNIK

Die DE 10 2007 025 733 A1 offenbart einen Schwingungsdämpfer, der ausgebildet ist zum Einsatz in einem Fahrwerk eines Fahrzeuges, mit einem Dämpferrohr und mit einem Dämpferkolben, der im Dämpferrohr hubbeweglich angeordnet ist und der mit einer Kolbenstange verbunden ist. Die Kolbenstange ist aus dem Dämpferrohr über ein Verschlusspaket herausgeführt, und der Dämpferkolben trennt einen ersten, kolbenstangenseitigen und mit Öl gefüllten Dämpferraum von einem gegenüberliegenden zweiten, kolbenstangenfernen mit Öl gefüllten Dämpferraum. Wird eine Ein- und Ausfahrbewegung in die Kolbenstange eingeleitet, so bewegt sich der Dämpferkolben durch den mit Öl gefüllten Dämpferraum, und verkleinert sich der erste Dämpferraum, so vergrößert sich der zweite Dämpferraum um den gleichen Volumenbetrag, was selbstverständlich auch umgekehrt gilt. Das Dämpferrohr weist aus die Fertigung vereinfachenden Gründen ein offenes Ende auf, das mit einem Bodenelement verschlossen ist. Das Bodenelement ist mit einem Montageauge verbunden, und der Schwingungsdämpfer wird zwischen dem Fahrzeugaufbau und der Rad-Achse-Einheit des Fahrzeuges angeordnet, indem das freie, aus dem Dämpferrohr herausgeführte Ende der Kolbenstange mit dem Fahrzeugaufbau verbunden wird, und wobei das Montageauge zur Aufnahme der Rad-Achse-Einheit dient.

Um das Volumen der ein- und ausfahrenden Kolbenstange auszugleichen, ist getrennt mit einem Trennkolben im Anschluss an den kolbenstangenfernen, zweiten Dämpferraum ein Gasraum vorgesehen, und der Trennkolben fährt in Richtung zum Gasraum und verkleinert diesen, wenn die Kolbenstange in das Dämpferrohr eingefahren wird, und der Trennkolben bewegt sich in Richtung zum zweiten Dämpferraum, wenn die Kolbenstange wieder ausgefahren wird und das Volumen des Gasraums kann sich wieder vergrößern. Der Gasraum schließt sich in axialer Richtung an den zweiten Dämpferraum an, sodass die gesamte Baulänge des Schwingungsdämpfers durch die Anordnung des Gasraums vergrößert wird. Abhängig von den Spezifikationen hinsichtlich der Baulänge des Schwingungsdämpfers, die häufig einbauseitig gefordert werden, muss der Gasraum aus dem Dämpferrohr verlegt werden in eine externe Ausgleichseinheit, sodass sich die Baulänge des Schwingungsdämpfers durch die Anordnung des Gasraums nicht vergrößert.

Beispielsweise zeigt die EP 2 249 057 A1 offenbart einen Schwingungsdämpfer der hier interessierenden Art mit einer externen Ausgleichseinheit, in der ein Gasraum, ein Trennkolben und ein Ölraum angeordnet sind. Der Ölraum wird durch den Trennkolben vom Gasraum getrennt, und der Ölraum ist über eine Leitung mit dem zweiten Dämpferraum fluidisch verbunden. Dabei ist am Fuße des zweiten Dämpferraums ein Bodenventil angeordnet, und das Bodenventil wird durchströmt, wenn Öl in den Ölraum eintritt und wenn Öl vom Ölraum wieder in den zweiten Dämpferraum überströmt. An das Bodenventil schließt sich eine Übergangskammer an, die als Teil des zweiten Dämpferraums betrachtet werden kann, und die Übergangskammer ist bodenseitig abgeschlossen mit einem Bodenelement, welches das Dämpferrohr zum Montageauge hin abschließt.

Nachteilhafterweise wird das Volumen des zweiten Dämpferraums durch die notwendige Übergangskammer unnötig vergrößert. Der Bedarf an Ausgleichsvolumen, insbesondere durch den Gasraum in der Ausgleichseinheit, wächst dabei mit zunehmender Ölmenge im Schwingungsdämpfer an, sodass es wünschenswert ist, das Gesamt-Ölvolumen des Schwingungsdämpfers möglichst zu minimieren. Das Volumen des Öls im Ölraum muss dabei ein Mindest-Volumen aufweisen, das wenigstens dem Volumen der ein- und ausfahrenden Kolbenstange entspricht. Der Trennkolben verfährt dabei in der Ausgleichseinheit um einen Weg, sodass mit dem Verfahrweg der Volumenausgleich stattfinden kann. Je größer das Gesamt-Ölvolumen ist, desto größer muss das Ausgleichsvolumen des Gasraums sein, da auch Temperaturunterschiede von beispielsweise -40°C bis +120°C berücksichtigt werden müssen, durch die sich das Öl entsprechend stark ausdehnt, welche Ausdehnung ebenfalls durch den Gasraum ausgeglichen wird. Das Dokument DE202005021063 U1 offenbart einen gattungsgemäßen Schwingungsdämpfer, der mit einem Bodenelement verschlossen ist. Das Bodenelement ragt in das Dämpferrohr hinein und wird demgegenüber mit einem Dichtelement abgedichtet.

### OFFENBARUNG DER ERFINDUNG

Aufgabe der Erfindung ist die Weiterbildung eines Schwingungsdämpfers mit einem verkürzten Bauraum und einem minimierten Ölvolumen.

Diese Aufgabe wird ausgehend von einem Schwingungsdämpfer gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Bodenelement mittels eines Massivbauteils gebildet ist, das in das Ende des Dämpferrohres hineinragt und dadurch das Ölvolumen des zweiten Dämpferraumes verkleinert.

Der Gedanke der Erfindung richtet sich auf ein optimiertes Bodenelement, das so ausgestaltet ist, dass sich das Ölvolumen des zweiten Dämpferraumes möglichst minimiert, wodurch schließlich das Ölvolumen des gesamten Schwingungsdämpfers reduziert wird, was ein kleineres notwendiges Gasausgleichsvolumen zur Folge hat. Hierfür soll das Bodenelement als Massivbauteil ausgebildet werden, wobei ein Massivbauteil im Sinne der vorliegenden Erfindung jedes Bauteil darstellt, das nicht durch das Ausgangsmaterial eines Blechelementes im Stanz-Biegeverfahren, im Tiefziehverfahren oder in sonstigen Flächenumformverfahren hergestellt ist. Beispielsweise bildet das Massivbauteil ein Spritzgussbauteil, ein Metall-Druckgussbauteil, ein Schmiedebauteil, ein Fließpressbauteil oder ein sonstiges Gussbauteil. Insbesondere weist das Massivbauteil Strukturbestandteile auf, die unterschiedliche Dicken aufweisen. Das Massivbauteil kann dabei insbesondere aus einem massiven Ausgangsmaterial durch spanende Bearbeitung hergestellt werden.

Durch die Ausgestaltung des Bodenelementes als Massivbauteil wird ein Volumen durch das Bodenelement eingenommen, das den Dämpferraum in seinem für das Öl freie Volumen reduziert. Die erzielte Verkleinerung des zweiten Dämpferraumes wird insbesondere dadurch erzeugt, dass das Bodenelement abschnittsweise in das Ende des Dämpferrohres hineinragt und dadurch das Ölvolumen des zweiten Dämpferraumes durch die Massivbauweise verkleinert. Besonders vorteilhaft ist es, wenn das Bodenelement eine Fläche aufweist, die im Wesentlichen plan ausgebildet ist und den zweiten Dämpferraum begrenzt. Die im Wesentlichen plane Ausbildung der Fläche beschreibt dabei wenigstens einen überwiegenden Teil der Fläche des Bodenelementes, die sich in einer Ebene erstreckt, sodass auch Vertiefungen, Absätze und dergleichen in der Fläche des Bodenelementes eingebracht sein können. Das Bodenelement ist im Wesentlichen rotationssymmetrisch um eine Mittelachse ausgebildet, wobei die Mittelachse orthogonal auf der Fläche fußt, die in Richtung zum zweiten Dämpferraum weist. Die beispielsweise zylinderförmige Mantelfläche des Bodenelementes sitzt dabei im Dämpferrohr ein, und die Fläche des Bodenelementes schließt den zweiten Dämpferraum in einer Ebene ab, die deutlich innerhalb des Endes des Dämpferrohres liegt.

Erfindungsgemäß weist das Bodenelement einen umlaufenden Schweißbund auf, über den das Bodenelement mit dem Ende des Dämpferrohres mittels einer Schweißnaht verschweißt ist. Der Schweißbund kann einen umlaufenden Absatz bilden, an den das Ende des Dämpferrohres zur Anlage gebracht wird, um schließlich die Schweißnaht vollumfänglich herzustellen und um das Ende des Dämpferrohres mit dem Bodenelement zu verschweißen.

Erfindungsgemäß weist das Bodenelement zusätzlich einen umlaufenden Dichtbund auf, der in das Dämpferrohr hineinragt und an dem ein Dichtelement aufgenommen ist, das gegen die Innenseite des Dämpferrohres abdichtend angeordnet ist. Der umlaufende Dichtbund liegt dabei näher an der Fläche des Bodenelementes, die in Richtung zum zweiten Dämpferraum weist, wobei die Fläche randseitig durch den Dichtbund abgeschlossen sein kann. Das Dichtelement ist insbesondere als O-Ringdichtung ausgebildet und sitzt außenseitig in der Mantelfläche des Dichtbundes in einer dazu eingebrachten Nut ein. Mit anderen Worten ragt der Dichtbund weiter in das Dämpferrohr hinein als der Schweißbund, sodass durch das Hineinragen des Dichtbundes ein weiteres Volumen des Dämpferrohres belegt wird, und mit dem Material des Massivbauteils gefüllt ist.

Ein weiterer Vorteil wird dadurch erreicht, dass zwischen dem Schweißbund und dem Dichtbund eine umlaufende Nut in das Bodenelement eingebracht ist, sodass der Schweißbund und der Dichtbund axial voneinander getrennt in Kontakt mit dem Dämpferrohr ausgebildet sind. Durch die umlaufende Dichtnut entsteht eine Wärmebarriere zwischen dem Schweißbund und dem Dichtbund, sodass beim Verschweißen des Dämpferrohres mit dem Bodenelement das zuvor an den Dichtbund angeordnete Dichtelement durch die eingebrachte Wärme beim Schweißen nicht beschädigt wird. Zudem wird durch die umlaufende Nut vom im Wesentlichen zylindrisch ausgeführten Bodenelement Material entnommen, sodass Gewicht eingespart werden kann.

Gemäß einer weiteren vorteilhaften Ausführungsform des Schwingungsdämpfers ist am Bodenelement ein Montageauge angeordnet, wobei das Montageauge mit dem Bodenelement einteilig und materialeinheitlich ausgebildet ist. Beispielsweise ist das Bodenelement aus einem Stahlwerkstoff hergestellt, wobei auch die Möglichkeit besteht, das Bodenelement beispielsweise aus Aluminium oder einem Kunststoff herzustellen. Die einheitliche Ausführung mit dem Montageauge ermöglicht dabei die Reduzierung von einzelnen Bauteilen und notwendigen Fügeschritten, da das Montageauge mit dem Bodenelement einteilig ausgeführt ist und somit ein einziger Fügeschritt an das Dämpferrohr notwendig und ausreichend ist.

Eine vorteilhafte Weiterbildung des Schwingungsdämpfers sieht ein im Dämpferrohr aufgenommenes Innenrohr vor, das sich konzentrisch zum Dämpferrohr durch dieses hindurch erstreckt, sodass ein Ringspalt zwischen dem Dämpferrohr und dem Innenrohr gebildet ist und sodass der Dämpferkolben im Innenrohr geführt ist. Dabei kann am bodenseitigen Ende des Innenrohres ein Bodenventil angeordnet sein, über das das Ende des Innenrohres aufgenommen und gegen das Dämpferrohr wenigstens radial abgestützt ist. Das Bodenventil befindet sich damit innerhalb des zweiten, kolbenstangenfernen und mit Öl gefüllten Dämpferraums, sodass sich das Bodenventil zwischen dem Dämpferkolben und dem Bodenelement befindet.

Der Schwingungsdämpfer kann so weitergebildet sein, dass dieser eine externe Ausgleichseinheit am Dämpferrohr aufweist, die einen Ölraum und einen Gasraum umfasst, wobei der Gasraum mittels eines beweglichen Trennkolbens vom Ölraum getrennt ist und über einen Öldurchgang mit dem zweiten Dämpferraum fluidisch verbunden ist. Durch die externe Anordnung der Ausgleichseinheit wird die erforderliche Baulänge des Schwingungsdämpfers reduziert, da sich der Gasraum nicht in axialer Richtung an den zweiten Dämpferraum anschließt. Der Ölraum ist über den Öldurchgang mit dem zweiten Dämpferraum fluidisch verbunden, wobei das in den Ölraum eintretende Öl zunächst das Bodenventil durchströmt, und federt der Gasraum zurück und drückt das Öl aus dem Ölraum zurück in den zweiten Dämpferraum, so wird das Bodenventil in entgegengesetzter Richtung durchströmt. Das Bodenventil sitzt dabei auf der Endseite des Innenrohres auf, und der Abstand zwischen dem Bodenventil und der Fläche des Bodenelementes ist möglichst minimal ausgeführt. Der axiale Abstand zwischen dem Bodenelement und dem Bodenventil entspricht dabei etwa dem Öffnungsdurchmesser des Öldurchgangs, welcher Öffnungsdurchmesser einen Mindest-Durchmesser aufweisen muss. Die Bemaßung des unteren Endes des Schwingungsdämpfers beginnt dabei mit dem Montageauge, an das sich der massive Teil des Bodenelementes anschließt, wobei am Bodenelement das Dämpferrohr aufgesetzt ist, in welchem schließlich das Bodenventil einsitzt. Der Abstand zwischen dem Bodenelement und dem Bodenventil ist dabei auf ein minimales Abstandsmaß begrenzt, welches so bestimmt ist, dass der Öldurchgang noch mit dem erforderlichen Durchmesser ausgeführt sein kann.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine quergeschnittene Ansicht eines Schwingungsdämpfers mit einem erfindungsgemäß ausgeführten Bodenelement und
- Figur 2: eine Detailansicht der Anordnung des Bodenelementes endseitig im Schwingungsdämpfer.

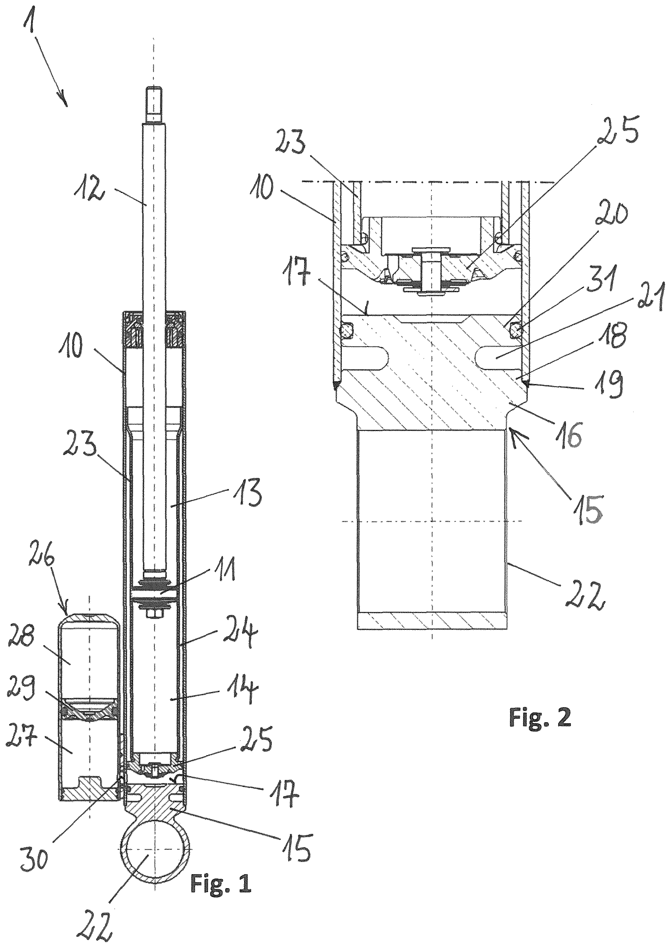

Figur 1 zeigt eine Gesamtansicht des Schwingungsdämpfers 1, welcher beispielsweise für ein Fahrwerk eines Fahrzeuges ausgebildet ist. Der Schwingungsdämpfer 1 weist ein Dämpferrohr 10 und einen Dämpferkolben 11 auf, der im Dämpferrohr 10 hubbeweglich angeordnet ist und am Dämpferkolben 11 schließt sich eine Kolbenstange 12 an, die endseitig aus dem Dämpferrohr 10 herausgeführt ist.

Der Dämpferkolben 11 teilt den Innenraum des Dämpferrohres 10 in einen ersten, kolbenstangenseitigen und mit Öl gefüllten Dämpferraum 13 und in einen zweiten, kolbenstangenfernen und mit Öl befüllten Dämpferraum 14 auf, wobei bei einer Bewegung des Dämpferkolbens 11 über die Kolbenstange 12 innerhalb des Dämpferrohres 10 Öl zwischen den Dämpferräumen 13 und 14 durch den Dämpferkolben 11 hindurch hin und her strömt.

Fährt die Kolbenstange 12 in das Dämpferrohr 10 ein, verdrängt diese einen Teil des Ölvolumens, welches mittels einer externen Ausgleichseinheit 26 kompensiert wird. Die Ausgleichseinheit 26 ist außenseitig am Dämpferrohr 10 angeordnet und weist einen Ölraum 27 und einen Gasraum 28 auf. Der Gasraum 28 ist dabei mittels eines beweglichen Trennkolbens 29 vom Ölraum 27 getrennt. Über einen Öldurchgang 30 ist der Ölraum 27 mit dem zweiten Dämpferraum 14 fluidisch verbunden. Taucht nun die Kolbenstange 12 in das Dämpferrohr 10 ein, so bewegt sich der Trennkolben 29 in Richtung zum Gasraum 28 und verkleinert diesen unter gleichzeitigem Druckanstieg. Bewegt sich die Kolbenstange 12 aus dem Dämpferrohr 10 wieder heraus, so entspannt sich das Gas im Gasraum 28 und drückt den Trennkolben 29 wieder in Richtung zum mit Öl gefüllten Ölraum 27. Dadurch strömt das Öl wieder über den Öldurchgang 30 vom Ölraum 27 zurück in den zweiten Dämpferraum 14.

Zur Dämpfung der Öl-Strömungsbewegung zwischen dem zweiten Dämpferraum 14 und dem Ölraum 27 dient ein Bodenventil 25, das im zweiten Dämpferraum 14 angeordnet ist. Ferner weist der Schwingungsdämpfer 1 ein Innenrohr 23 auf, und das Innenrohr 23 besitzt einen Durchmesser, der kleiner ist als der Durchmesser des Dämpferrohres 10. Folglich bildet sich ein Ringspalt 24, welcher ebenfalls mit Öl gefüllt ist und das Öl im Ringspalt 24 kann eine Strömungsbewegung ausführen, wenn der Dämpferkolben 11 axial im Dämpferrohr 10 hin und her bewegt wird.

Das endseitig geöffnete Dämpferrohr 10 ist mit einem Bodenelement 15 verschlossen, das einteilig ausgebildet ist mit einem Montageauge 22. Das Bodenelement 15 weist einen im Wesentlichen zylindrischen Abschnitt auf, und eine Planfläche des zylindrischen Abschnittes ist mit der Fläche 17 bezeichnet, welche in Richtung zum zweiten Dämpferraum 14 weist.

Figur 2 zeigt in einer detaillierten Ansicht die Anordnung des Bodenelementes 15 innerhalb der Endseite des Dämpferrohres 10. Die Ansicht zeigt einen endseitigen Teil des Innenrohres 23, und es ist das Bodenventil 25 dargestellt, an das das Ende des Innenrohres 23 angrenzt und das Bodenventil 25 sitzt zentrisch innerhalb des Dämpferrohres 10 ein und nimmt das Ende des Innenrohres 23 auf.

Das Bodenelement 15 ragt in einen Endabschnitt des Dämpferrohres 10 hinein und ist über einen Schweißbund 18 mit einer Schweißnaht 19 mit dem Dämpferrohr 10 verschweißt. In Richtung zur Fläche 17 schließt sich an den Schweißbund 18 ein Dichtbund 20 an, in dem ein Dichtelement 31 einsitzt, und zwischen dem Dichtbund 20 und dem Schweißbund 18 befindet sich eine Nut 21, die in Form eines radial von der Außenseite eingebrachten Einstiches ausgebildet ist.

Das Bodenelement 15 ist als Massivbauteil 16 ausgebildet und einteilig mit einem Montageauge 22 ausgeführt, sodass der Schwingungsdämpfer 1 vermittels des Bodenelementes 15 unmittelbar mit einer Rad-Achse-Einheit des Fahrzeuges verbunden werden kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Schwingungsdämpfer

- 10: Dämpferrohr
- 11: Dämpferkolben
- 12: Kolbenstange
- 13: erster Dämpferraum
- 14: zweiter Dämpferraum
- 15: Bodenelement
- 16: Massivbauteil
- 17: Fläche
- 18: Schweißbund
- 19: Schweißnaht
- 20: Dichtbund
- 21: Nut
- 22: Montageauge
- 23: Innenrohr
- 24: Ringspalt
- 25: Bodenventil
- 26: externe Ausgleichseinheit
- 27: Ölraum
- 28: Gasraum
- 29: Trennkolben
- 30: Öldurchgang
- 31: Dichtelement

## Patentansprüche

1. Schwingungsdämpfer (1), insbesondere ausgebildet für ein Fahrwerk eines Fahrzeuges, mit einem Dämpferrohr (10) und mit einem Dämpferkolben (11), der im Dämpferrohr (10) hubbeweglich angeordnet ist und der mit einer Kolbenstange (12) verbunden ist, die aus dem Dämpferrohr (10) herausgeführt ist, und wobei der Dämpferkolben (11) einen ersten, kolbenstangenseitigen mit Öl gefüllten Dämpferraum (13) von einem zweiten, kolbenstangenfernen mit Öl gefüllten Dämpferraum (14) beweglich trennt, und wobei an einem Ende des Dämpferrohres (10) ein Bodenelement (15) angeordnet ist, das ein offenes Ende des Dämpferrohres (10) abdichtet, wobei das Bodenelement (15) mittels eines Massivbauteils (16) gebildet ist, das in das Ende des Dämpferrohres (10) hineinragt und dadurch das Ölvolumen des zweiten Dämpferraumes (14) verkleinert,
**dadurch gekennzeichnet, dass**
das Bodenelement (15) einen umlaufenden Schweißbund (18) aufweist, über den das Bodenelement (15) mit dem Ende des Dämpferrohres (10) mittels einer Schweißnaht (19) verschweißt ist, und das Bodenelement (15) einen umlaufenden Dichtbund (20) aufweist, der in das Dämpferrohr (10) hineinragt und an dem ein Dichtelement (31) aufgenommen ist, das gegen die Innenseite des Dämpferrohres (10) abdichtend angeordnet ist.

2. Schwingungsdämpfer (1) nach Anspruch 1, **dadurch gekennzeichnet, dass** das Bodenelement (15) eine Fläche (17) aufweist, die im Wesentlichen plan ausgebildet ist und den zweiten Dämpferraum (14) begrenzt.

3. Schwingungsdämpfer (1) nach Anspruch 1 oder 2, **dadurch gekennzeichnet, dass** zwischen dem Schweißbund (18) und dem Dichtbund (20) eine umlaufende Nut (21) in das Bodenelement (15) eingebracht ist, sodass der Schweißbund (18) und der Dichtbund (20) axial voneinander getrennt in Kontakt mit dem Dämpferrohr (10) ausgebildet sind.

4. Schwingungsdämpfer (1) nach einem der vorgenannten Ansprüche, **dadurch gekennzeichnet, dass** am Bodenelement (15) ein Montageauge (22) angeordnet ist, wobei das Montageauge (22) mit dem Bodenelement (15) einteilig und materialeinheitlich ausgebildet ist.

5. Schwingungsdämpfer (1) nach einem der vorgenannten Ansprüche, **dadurch gekennzeichnet, dass** im Dämpferrohr (10) ein Innenrohr (23) aufgenommen ist und sich konzentrisch zum Dämpferrohr (10) erstreckt, sodass ein Ringspalt (24) zwischen dem Dämpferrohr (10) und dem Innenrohr (23) gebildet ist und sodass der Dämpferkolben (11) im Innenrohr (23) geführt ist.

6. Schwingungsdämpfer (1) nach Anspruch 5, **dadurch gekennzeichnet, dass** am bodenseitigen Ende des Innenrohres (23) ein Bodenventil (25) angeordnet ist, über das das Ende des Innenrohres (23) aufgenommen und gegen das Dämpferrohr (10) wenigstens radial abgestützt ist.

7. Schwingungsdämpfer (1) nach einem der vorgenannten Ansprüche, **dadurch gekennzeichnet, dass** eine externe Ausgleichseinheit (26) am Dämpferrohr (10) angeordnet ist, die einen Ölraum (27) und einen Gasraum (28) aufweist, wobei der Gasraum (28) mittels eines beweglichen Trennkolbens (29) vom Ölraum (27) getrennt ist und über einen Öldurchgang (30) mit dem zweiten Dämpferraum (14) fluidisch verbunden ist.

8. Schwingungsdämpfer (1) nach Anspruch 6 oder 7, **dadurch gekennzeichnet, dass** der axiale Abstand zwischen dem Bodenelement (15) und dem Bodenventil (25) mit dem Öffnungsdurchmesser des Öldurchganges (30) korrespondiert.

## Claims

1. Vibration damper (1), in particular designed for a chassis of a vehicle, with a damper tube (10) and a damper piston (11) which is arranged in the damper tube (10) so as to be reciprocatingly movable and is connected to a piston rod (12) which extends out of the damper tube (10), wherein the damper piston (11) movably separates a first oil-filled damper chamber (13) on the piston rod side from a second oil-filled damper chamber (14) remote from the piston rod, and wherein a bottom element (15) is arranged at one end of the damper tube (10) and seals an open end of the damper tube (10), wherein the bottom element (15) is formed by a solid component (16) which protrudes into the end of the damper tube (10) and thereby reduces the oil volume of the second damper chamber (14),
**characterized in that**
the bottom element (15) has a circumferential welding collar (18) via which the bottom element (15) is welded to the end of the damper tube (10) by means of a weld seam (19), and the bottom element (15) has a circumferential sealing collar (20) which protrudes into the damper tube (10) and receives a sealing element (31) which is arranged in a sealing manner against the inside of the damper tube (10).

2. Vibration damper (1) according to Claim 1, **characterized in that** the bottom element (15) has a surface (17) which is formed substantially flat and delimits the second damper chamber (14).

3. Vibration damper (1) according to Claim 1 or 2, **characterized in that** a circumferential groove (21) is made in the bottom element (15) between the welding collar (18) and the sealing collar (20), so that the welding collar (18) and the sealing collar (20) are formed axially separated from each other in contact with the damper tube (10).

4. Vibration damper (1) according to any of the preceding claims, **characterized in that** a mounting eye (22) is arranged on the bottom element (15), wherein the mounting eye (22) is formed one-piece and uniform in material with the bottom element (15).

5. Vibration damper (1) according to any of the preceding claims, **characterized in that** an inner tube (23) is received in the damper tube (10) and extends concentrically to the damper tube (10), so that a ring gap (24) is formed between the damper tube (10) and the inner tube (23) and so that the damper piston (11) is guided in the inner tube (23).

6. Vibration damper (1) according to Claim 5, **characterized in that** a bottom valve (25) is arranged on the bottom end of the inner tube (23) and receives the end of the inner tube (23) and supports this at least radially against the damper tube (10).

7. Vibration damper (1) according to any of the preceding claims, **characterized in that** an external compensation unit (26) is arranged on the damper tube (10) and has an oil chamber (27) and a gas chamber (28), wherein the gas chamber (28) is separated from the oil chamber (27) by means of a movable separating piston (29) and is fluidically connected to the second damper chamber (14) via an oil passage (30).

8. Vibration damper (1) according to Claim 6 or 7, **characterized in that** the axial distance between the bottom element (15) and the bottom valve (25) corresponds to the opening diameter of the oil passage (30) .

## Revendications

1. Amortisseur de vibrations (1), en particulier réalisé pour un châssis d'un véhicule, comprenant un tube d'amortisseur (10) et un piston d'amortisseur (11) qui est disposé de manière à se déplacer avec un mouvement de course dans le tube d'amortisseur (10) et qui est connecté à une tige de piston (12) qui est guidée hors du tube d'amortisseur (10), et le piston d'amortisseur (11) séparant de manière déplaçable un premier espace d'amortisseur (13) rempli d'huile du côté de la tige de piston, d'un deuxième espace d'amortisseur (14) rempli d'huile éloigné de la tige de piston, et un élément de fond (15) étant disposé à une extrémité du tube d'amortisseur (10), lequel étanchéifie une extrémité ouverte du tube d'amortisseur (10), l'élément de fond (15) étant formé au moyen d'un composant massif (16) qui pénètre dans l'extrémité du tube d'amortisseur (10) et qui réduit de ce fait le volume d'huile du deuxième espace d'amortisseur (14),
**caractérisé en ce que**
l'élément de fond (15) présente un collier de soudage périphérique (18) par le biais duquel l'élément de fond (15) est soudé à l'extrémité du tube d'amortisseur (10) au moyen d'un joint de soudure (19), et l'élément de fond (15) présente un collier d'étanchéité (20) périphérique qui pénètre dans le tube d'amortisseur (10) et au niveau duquel est reçu un élément d'étanchéité (31) qui est disposé de manière hermétique contre le côté intérieur du tube d'amortisseur (10).

2. Amortisseur de vibrations (1) selon la revendication 1, **caractérisé en ce que** l'élément de fond (15) présente une surface (17) qui est réalisée sous forme essentiellement plane et qui limite le deuxième espace d'amortisseur (14).

3. Amortisseur de vibrations (1) selon la revendication 1 ou 2, **caractérisé en ce qu'**entre le collier de soudage (18) et le collier d'étanchéité (20) est introduite une rainure périphérique (21) dans l'élément de fond (15) de telle sorte que le collier de soudage (18) et le collier d'étanchéité (20) soient réalisés de manière séparée axialement l'un de l'autre en contact avec le tube d'amortisseur (10).

4. Amortisseur de vibrations (1) selon l'une quelconque des revendications précédentes, **caractérisé en ce qu'**au niveau de l'élément de fond (15) est disposé un œillet de montage (22), l'œillet de montage (22) étant réalisé d'une seule pièce et venu de matière avec l'élément de fond (15) .

5. Amortisseur de vibrations (1) selon l'une quelconque des revendications précédentes, **caractérisé en ce qu'**un tube intérieur (23) est reçu dans le tube d'amortisseur (10) et s'étend concentriquement au tube d'amortisseur (10) de telle sorte qu'une fente annulaire (24) soit formée entre le tube d'amortisseur (10) et le tube intérieur (23) et de telle sorte que le piston d'amortisseur (11) soit guidé dans le tube intérieur (23).

6. Amortisseur de vibrations (1) selon la revendication 5, **caractérisé en ce qu'**à l'extrémité du côté du fond du tube intérieur (23) est disposée une soupape de fond (25) par le biais de laquelle l'extrémité du tube intérieur (23) est reçue et est supportée au moins radialement contre le tube d'amortisseur (10).

7. Amortisseur de vibrations (1) selon l'une quelconque des revendications précédentes, **caractérisé en ce qu'**une unité d'équilibrage externe (26) est disposée au niveau du tube d'amortisseur (10), laquelle présente un espace d'huile (27) et un espace de gaz (28), l'espace de gaz (28) étant séparé de l'espace d'huile (27) au moyen d'un piston de séparation mobile (29) et étant connecté fluidiquement au deuxième espace d'amortisseur (14) par le biais d'un passage d'huile (30).

8. Amortisseur de vibrations (1) selon la revendication 6 ou 7, **caractérisé en ce que** la distance axiale entre l'élément de fond (15) et la soupape de fond (25) correspond au diamètre d'ouverture du passage d'huile (30).
